# EUROPEAN PATENT APPLICATION

(11) **EP 2 549 357 A2**
(43) Date of publication of application: **23.01.2013**
(21) Application number: 12175162.2
(22) Date of filing: 05.07.2012
(51) Int. Cl.: G06F 1/16

(54) **Device for displaying an image**

(30) Priority: 19.07.2011 US 201113186003
(71) Applicant: Honeywell International Inc., NJ 07962-2245 (US)
(72) Inventor: De Mers, Robert E., Morristown, NJ New Jersey 07962-2245 (US); Plocher, Tom, Morristown, NJ New Jersey 07962-2245 (US)
(74) Representative: Houghton, Mark Phillip

(57) **Abstract**

Devices, methods, and systems for displaying an image are described herein. One or more device embodiments include a user interface configured to display an image, a motion sensor configured to sense movement of the device, and a processor configured to convert the movement of the device to a corresponding movement of the display of the image.

## Description

### Technical Field

The present disclosure relates to devices, methods, and systems for displaying an image.

### Background

A portable handheld device, such as, for instance, a portable handheld mobile phone, media player, scanner, etc., can include, for example, a user interface (e.g., a screen). The user interface can display an image of a document (e.g., a photo, a blueprint, text, a web page, etc.) to a user of the portable handheld device.

The user interface, however, may be small, which can make it difficult for the user of the portable handheld device to view the document, especially if the document is large. For example, to view the entire document, the user may have to move the display of the image on the user interface. For instance, the user may have to magnify and/or demagnify the display of the image (e.g., zoom in and/or out on the displayed image), and/or directionally move the display of the image (e.g., scroll and/or pan the displayed image up, down, left, and/or right).

The user may be able to move the display of the image on the user interface using, for example, a directional pad, joystick, and/or button(s) of the portable handheld device. For instance, the user may be able to directionally move the display of the image by pressing the directional pad or joystick in a particular direction, and/or the user may be able to magnify and/or demagnify the display of the image by pressing the button(s). The user may also be able to move the display of the image by, for example, touching the user interface. For instance, the user may be able to directionally move the display of the image by touching the user interface with a finger and dragging the finger across the screen in a particular direction, and/or the user may be able to magnify and/or demagnify the display of the image by tapping the screen.

However, moving the display of the image on the user interface using a directional pad, joystick, and/or button(s), and/or by touching the user interface, can be difficult and/or time consuming for the user. Accordingly, it may be difficult and/or time consuming for the user to view the entire image (e.g., the entire document).

### Brief Description of the Drawings

Figure 1 illustrates a device for displaying an image in accordance with one or more embodiments of the present disclosure.
Figures 2A and 2B illustrate different portions of an image displayed in accordance with one or more embodiments of the present disclosure.

### Detailed Description

Devices, methods, and systems for displaying an image are described herein. One or more device embodiments include a user interface configured to display an image, a motion sensor configured to sense movement of the device, and a processor configured to convert the movement of the device to a corresponding movement of the display of the image.

One or more embodiments of the present disclosure can display images in a simple, straightforward manner. For example, in one or more embodiments of the present disclosure, a display of an image on a user interface of a device can be moved by a user of the device in a simple, straightforward, and/or quick manner. Accordingly, the user may be able to view the entire image simply and/or quickly.

In the following detailed description, reference is made to the accompanying drawings that form a part hereof. The drawings show by way of illustration how one or more embodiments of the disclosure may be practiced. These embodiments are described in sufficient detail to enable those of ordinary skill in the art to practice one or more embodiments of this disclosure. It is to be understood that other embodiments may be utilized and that process, electrical, and/or structural changes may be made without departing from the scope of the present disclosure.

As will be appreciated, elements shown in the various embodiments herein can be added, exchanged, combined, and/or eliminated so as to provide a number of additional embodiments of the present disclosure. The proportion and the relative scale of the elements provided in the figures are intended to illustrate the embodiments of the present disclosure, and should not be taken in a limiting sense.

As used herein, "a" or "a number of" something can refer to one or more such things. For example, "a number of documents" can refer to one or more images.

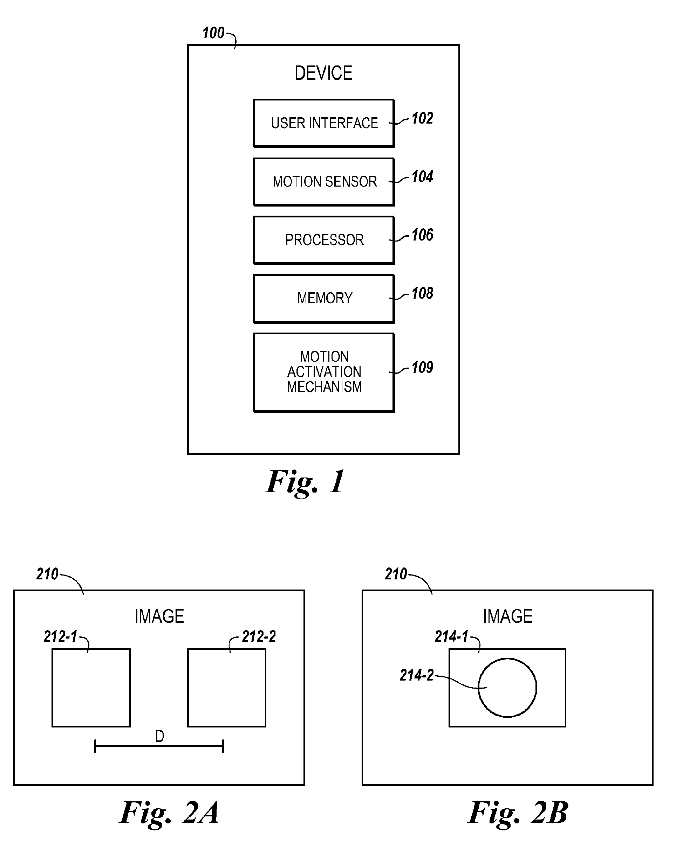

Figure 1 illustrates a device 100 for displaying an image in accordance with one or more embodiments of the present disclosure. Device 100 can be, for example, a portable handheld device, such as, for instance, a portable handheld mobile phone, media player, or scanner. However, embodiments of the present disclosure are not limited to a particular type of device.

As shown in Figure 1, device 100 includes a user interface 102. User interface 102 can display an image (e.g., to a user of device 100). For example, user interface 102 can display an image such that a portion of the image is displayed on user interface 102. That is, user interface 102 can display a portion of the image. User interface 102 can include, for instance, a screen that can display the image (e.g., to the user of device 100). However, embodiments of the present disclosure are not limited to a particular type of user interface.

The image displayed on user interface 102 can be, for example, an image of a document. For instance, the image displayed on user interface 102 (e.g., the portion of the image displayed on user interface 102) can be a portion of the document. The document can be, for example, a photo, a blueprint (e.g., of a building),a map, text, or a web page, among other types of documents. However, embodiments of the present disclosure are not limited to a particular type of document or image.

As shown in Figure 1, device 100 includes a motion sensor 104. Motion sensor 104 can sense movement (e.g., physical movement) of device 100 (e.g., with respect to a fixed point). For example, motion sensor 104 can sense movement of device 100 in a horizontal plane with respect to the fixed point (e.g., to the left, right, up, and/or down with respect to the fixed point), movement of device 100 in a vertical plane with respect to the fixed point (e.g., towards and/or away from the fixed point), a tilting of device 100 along an axis that runs through device 100, and/or a rotation of device 100 around an axis that runs through device 100, among other types of movement. Motion sensor 104 may also be able to sense the distance and/or speed (e.g., linear distance and/or linear speed) of the movement of device 100.

In some embodiments, motion sensor 104 can include a camera and an image processor that can perform optical flow analysis. In some embodiments, motion sensor 104 can include a gyroscope and/or accelerometer. However, embodiments of the present disclosure are not limited to a particular type of motion sensor. Further, although the embodiment illustrated in Figure 1 includes one motion sensor, embodiments of the present disclosure are not so limited. For example, device 100 can include any number of motion sensors.

As shown in Figure 1, device 100 includes a processor 106 and a memory 108. Although not illustrated in Figure 1, memory 108 can be coupled to processor 106. Processor 106 can be, for example, a graphics processor associated with user interface 102. However, embodiments of the present disclosure are not limited to a particular type of processor.

Memory 108 can be volatile or nonvolatile memory. Memory 108 can also be removable, e.g., portable memory, or non-removable, e.g., internal memory. For example, memory 108 can be random access memory (RAM), read-only memory (ROM), dynamic random access memory (DRAM), electrically erasable programmable read-only memory (EEPROM), flash memory, phase change random access memory (PCRAM), compact-disk read-only memory (CD-ROM), a laser disk, a digital versatile disk (DVD) or other optical disk storage, and/or a magnetic medium such as magnetic cassettes, tapes, or disks, among other types of memory.

Further, although memory 108 is illustrated as being located in device 100, embodiments of the present disclosure are not so limited. For example, memory 108 can also be located internal to another computing resource, e.g., enabling computer readable instructions to be downloaded over the Internet or another wired or wireless connection.

Memory 108 can store a number of documents (e.g., photos, blueprints, maps, texts, and/or web pages, among other types of documents). Memory 108 can also store executable instructions, such as, for example, computer readable instructions (e.g., software), for displaying an image in accordance with one or more embodiments of the present disclosure. For example, memory 108 can store executable instructions for displaying an image of a document stored in memory 108 on user interface 102 in accordance with one or more embodiments of the present disclosure.

Processor 106 can execute the executable instructions stored in memory 108 to display an image in accordance with one or more embodiments of the present disclosure. For example, processor 106 can execute the executable instructions stored in memory 108 to display an image of a document stored in memory 108 on user interface 102 in accordance with one or more embodiments of the present disclosure.

For example, in some embodiments, processor 106 can convert the movement (e.g., the physical movement) of device 100 sensed by motion sensor 104 to a corresponding movement of the display of the image on user interface 102. That is, processor 106 can move the display of the image on user interface 102, with the movement of the display of the image corresponding to (e.g., based on) the sensed movement of device 100. For example, processor 106 can move the display of the image such that a different portion of the image (e.g., a different portion of the document) is displayed on user interface 102, with the movement of the display of the image corresponding to the sensed movement of device 100.

The corresponding movement of the display of the image on user interface 102 can be, for example, a movement in a horizontal plane with respect to the display of the image (e.g., a scrolling and/or panning of the display of the image to the left, right, up, and/or down), a magnification or demagnification of the image (e.g., a zoom in on or zoom out from the image), a tilting of the display of the image, and/or a rotation of the display of the image. That is, the different portion of the image displayed on user interface 102 after the display is moved may not have been previously displayed on user interface 102 while the first portion of the image was displayed (e.g., before the display was moved), may include a magnified, demagnified, and/or non-magnified portion of the first image displayed on user interface 102, and/or may included a tilted and/or rotated version of the first image displayed on user interface 102. The image can remain fixed (e.g., virtually fixed) with respect to the display of the image while the display of the image moves.

In some embodiments, the corresponding movement of the display of the image on user interface 102 can be, for example, a movement in the opposite direction of the movement of device 100 sensed by motion sensor 104. For instance, if the movement of device 100 (e.g., with respect to the fixed point) is to the left, the display of the image on user interface 102 may move (e.g., scroll and/or pan) to the right.

In some embodiments, the corresponding movement of the display of the image on user interface 102 can be, for example, a movement in the same direction of the movement of device 100. For instance, if the movement of device 100 is to the left, the display of the image on user interface 102 may move to the left.

In some embodiments, the distance of the corresponding movement of the display of the image on user interface 102 can have an approximately one-to-one correspondence with the distance of the movement of device 100 sensed by motion sensor 104. That is, the distance of the corresponding movement of the display of the image on user interface 102 may be substantially similar to the distance of the movement of device 100. For example, if device 100 moves a distance of approximately one inch, the display of the image on user interface 102 may also move approximately one inch.

In some embodiments, the distance of the corresponding movement of the display of the image on user interface 102 may not have a one-to-one correspondence with the distance of the movement of device 100. That is, the distance of the corresponding movement of the display of the image on user interface 102 may be different than the distance of the movement of device 100.

In some embodiments, the distance of the corresponding movement of the display of the image on user interface 102 can correspond to a speed of the movement of device 100 sensed by motion sensor 104. For example, the faster device 100 moves, the greater the distance of the corresponding movement of the display of the image.

In some embodiments, the corresponding movement of the display of the image on user interface 102 may be in a horizontal plane with respect to the display of the image if the movement of device 100 sensed by motion sensor 104 is in a horizontal plane (e.g., with respect to the fixed point). For example, if the movement of device 100 is to the left, right, up, and/or down with respect to the fixed point, the display of the image may be scrolled and/or panned to the left, right, up, and/or down.

In some embodiments, the corresponding movement of the display of the image on user interface 102 may be a magnification or demagnification of the image (e.g., a zoom in on and/or zoom out from the image) if the movement of device 100 sensed by motion sensor 104 is in a vertical plane (e.g., with respect to the fixed point). For example, if the movement of device 100 is toward the fixed point, the image may be magnified, and if the movement of device 100 is away from the fixed point, the image may be demagnified. Additionally, in such embodiments, if an additional movement of device 100 (e.g., a movement of device 100 in a horizontal plane with respect to the fixed object) is sensed by motion sensor 104 (e.g., after the image has been magnified or demagnified), processor 106 can move the display of the magnified or demagnified image on user interface 102 (e.g., in a horizontal plane with respect to the display of the image) such that a different portion of the magnified or demagnified image is displayed on user interface 102, with the movement of the display of the magnified or demagnified image corresponding to the additional movement of device 100 in a manner analogous to that previously described herein.

Device 100 can be moved in a vertical plane in a number of different ways. For example, if a user of device 100 is holding device 100 at a slight vertical angle from horizontal, the user can move device 100 up and/or down while continuing to hold device 100 at the slight vertical angle. As an additional example, if the user of device 100 is holding device 100 at a slight vertical angle from horizontal, the user can keep the base of device 100 stable, but rotate and/or roll the top of device 100 (e.g., the end of device 100 having motion sensor 104) up and/or down. However, embodiments of the present disclosure are not limited to a particular type or method of vertical plane motion.

In some embodiments, the corresponding movement of the display of the image on user interface 102 may be a tilting of the display of the image and/or a rotation of the display of the image if the movement of device 100 sensed by motion sensor 104 is a tilting of device 100 along an axis that runs through device 100 and/or a rotation of device 100 around an axis that runs through device 100. For example, if the movement of device 100 is a tilting of device 100, other (e.g., different and/or new) portions of the image may be brought into view. For instance, as device 100 is tilted, new portions of the image may move (e.g., slide) smoothly across user interface 102 in the direction of the tilt, thereby maintaining a flat image. The image may continue to slide across user interface 102 until device 100 is tilted back in the other direction to its original position (e.g., level), at which point the movement of the image may stop. Additionally and/or alternatively, as device 100 is tilted (e.g., away from the image), different portions of the image may be displayed in a skewed perspective. For instance, the image may become distorted by perspective near the edge of user interface 102.

Processor 106 can convert the movement of device 100 sensed by motion sensor 104 to the corresponding movement of the display of the image on user interface 102 using, for example, data received from motion sensor 104. That is, motion sensor 104 can provide data representing the sensed movement of device 100 to processor 106, and processor 106 can convert the data to the corresponding movement of the display of the image. In embodiments in which motion sensor 104 includes a camera, the data provided by motion sensor 104 can represent, for example, a pixel difference associated with the movement of the camera.

As shown in Figure 1, device 100 can optionally include a motion activation mechanism 109. Motion activation mechanism 109 can be, for example, a button or a switch. When motion activation mechanism 109 is engaged (e.g., pressed and/or switched on by a user of device 100), processor 106 can convert movement of device 100 to a corresponding movement of the display of an image on user interface 102, as previously described herein. When motion activation mechanism 109 is not engaged (e.g., released and/or switched off), processor 106 may not convert movement of device 100 to a corresponding movement of the display of an image on user interface 102 (e.g., the display of the image may not change even though device 100 may be in motion). That is, a user of device 100 can initiate motion of the image by engaging motion activation mechanism 109, and end the motion of the image by disengaging motion activation mechanism 109. In some embodiments, when the motion of the image is ended, the display (e.g., the particular portion and/or zoom level) of the image being displayed on user interface 102 at the point when the motion of the image is ended may remain fixed on user interface 102. That is, in some embodiments, when motion activation mechanism 109 is disengaged, the display of the image being displayed on user interface 102 when motion activation mechanism 109 is disengaged may remain fixed on user interface 102.

As an example, a user of device 100 can engage motion activation mechanism 109 and move device 100 around such that a particular portion of an image is displayed on user interface 102. The user can then disengage motion activation mechanism 109 and move device 100 (e.g., set device 100 down and/or put device 100 in his or her pocket) without losing the display of the particular portion of the image.

As an additional example, motion activation mechanism 109 can allow a user of device 100 to reset device 100 to its initial position (e.g., zero point of motion) while moving an image. For instance, the user can engage motion activation mechanism 109 and move device 100 a comfortable distance such that the image is moved. The user can then disengage motion activation mechanism 109 and move device 100 back to its initial position. The user can then once again engage motion activation mechanism 109 and move device 100 to resume motion of the image.

Figures 2A and 2B illustrate different portions 212-1, 212-2, 214-1, and 214-2 of an image 210 displayed in accordance with one or more embodiments of the present disclosure. The different portions of image 210 can be displayed on a user interface of a device (e.g., user interface 102 of device 100 previously described in connection with Figure 1). Additionally, image 210 can be, for example, an image of a document, as previously described in connection with Figure 1.

For example, in the embodiment illustrated in Figure 2A, portion 212-1 of image 210 can be initially displayed on the user interface of the device. That is, the user interface can initially display image 210 such that portion 212-1 of image 210 is displayed on the user interface.

While portion 212-1 of image 210 is being displayed on the user interface of the device, movement (e.g., physical movement) of the device (e.g., with respect to a fixed point), may be sensed. In the embodiment illustrated in Figure 2A, the movement of the device may be, for example, a distance D to the left of the fixed point. The movement of the device can be sensed by, for example, a motion sensor of the device (e.g., motion sensor 104 previously described in connection with Figure 1).

The movement of the device can be converted to a corresponding movement of the display of image 210 on the user interface. That is, the display of image 210 may be moved, with the movement of the display of image 210 corresponding to (e.g., based on) the movement of the device. For example, in the embodiment illustrated in Figure 2A, the display of image 210 on the user interface of the device may be moved such that a different portion (e.g., portion 212-2) of image 210 is displayed on the user interface (e.g., such that portion 212-1 is no longer displayed). That is, the display of image 210 may be moved (e.g., scrolled and/or panned) the distance D to the right from the initial display, as illustrated in Figure 2A. The display of image 210 may be moved using, for example, a processor (e.g., processor 106 previously described in connection with Figure 1).

In the embodiment illustrated in Figure 2A, the corresponding movement of the display of image 210 is a movement in a horizontal plane with respect to the display of image 210 (e.g., a scrolling and/or panning of the display of image 210 to the right from portion 212-1 to 212-2). That is, the portion of image 210 displayed after the display is moved (e.g., portion 212-2) was not previously displayed while the initial portion of image 210 (e.g., portion 212-1) was displayed. The corresponding movement of image 210 may be a movement in a horizontal plane with respect to the display of image 210 because, for example, the movement of the device was also in a horizontal plane (e.g., to the left) with respect to the fixed point.

Further, in the embodiment illustrated in Figure 2A, the corresponding movement of the display of image 210 is a movement in the opposite direction of the movement of the device (e.g., the corresponding movement of the display of image 210 is a movement to the right). However, embodiments of the present disclosure are not so limited, as previously described herein. For example, although not illustrated in Figure 2A, the corresponding movement of the display of image 210 could be a movement in the same direction of the movement of the device (e.g., the corresponding movement of the display of image 210 could be a movement to the left), as previously described herein.

Additionally, in the embodiment illustrated in Figure 2A, the distance of the corresponding movement of the display of image 210 (e.g., the distance D) has an approximately one-to-one correspondence with the distance of the movement of the device. That is, the distance of the movement of the device and the distance of the corresponding movement of the display of image 210 are substantially similar. However, embodiments of the present disclosure are not so limited, as previously described herein. For example, although not illustrated in Figure 2A, the distance of the corresponding movement of the display of image 210 may not have a one-to-one correspondence with the distance of the movement of the device, as previously described herein.

In the embodiment illustrated in Figure 2B, portion 214-1 of image 210 can be initially displayed on the user interface of the device. That is, the user interface can initially display image 210 such that portion 214-1 of image 210 is displayed on the user interface.

While portion 214-1 of image 210 is being displayed on the user interface of the device, movement (e.g., physical movement) of the device (e.g., with respect to a fixed point), may be sensed. In the embodiment illustrated in Figure 2B, the movement of the device may be, for example, a movement toward the fixed point. The movement of the device can be sensed by, for example, a motion sensor of the device (e.g., motion sensor 104 previously described in connection with Figure 1).

The movement of the device can be converted to a corresponding movement of the display of image 210 on the user interface. That is, the display of image 210 may be moved, with the movement of the display of image 210 corresponding to (e.g., based on) the movement of the device. For example, in the embodiment illustrated in Figure 2B, the display of image 210 on the user interface of the device may be moved such that a different portion (e.g., a magnified portion 214-2 of portion 214-1 and a non-magnified portion of portion 214-1) of image 210 is displayed on the user interface. That is, the display of image 210 may be magnified, as illustrated in Figure 2B. The display of image 210 may be moved (e.g., magnified) using, for example, a processor (e.g., processor 106 previously described in connection with Figure 1).

In the embodiment illustrated in Figure 2B, the corresponding movement of the display of image 210 is a magnification of image 210 (e.g., a zoom in on portion 214-2 of portion 214-1). That is, the portion of image 210 displayed after the display is moved (e.g., the different portion of image 210) includes a magnified portion (e.g., portion 214-2) of the initial portion of image 210 (e.g., portion 214-1), and a non-magnified portion of the initial portion of image 210 (e.g., portion 214-1). The corresponding movement of the display of 210 may be a magnification of image 210 because, for example, the movement of the device was toward the fixed point.

Additionally, although not illustrated in Figure 2B, if an additional movement of the device (e.g., a movement of the device in a horizontal plane with respect to the fixed object) is sensed after image 210 (e.g., portion 214-2 of portion 214-1) has been magnified, the magnified display of image 210 can be moved (e.g., in a horizontal plane with respect to the display of image 210) such that a different portion of magnified image 210 is displayed (e.g., such that a different portion of image 210 is magnified), with the movement of the magnified display of image 210 corresponding to the additional movement of the device in a manner analogous to that previously described herein.

Although specific embodiments have been illustrated and described herein, those of ordinary skill in the art will appreciate that any arrangement calculated to achieve the same techniques can be substituted for the specific embodiments shown. This disclosure is intended to cover any and all adaptations or variations of various embodiments of the disclosure.

It is to be understood that the above description has been made in an illustrative fashion, and not a restrictive one. Combination of the above embodiments, and other embodiments not specifically described herein will be apparent to those of skill in the art upon reviewing the above description.

The scope of the various embodiments of the disclosure includes any other applications in which the above structures and methods are used. Therefore, the scope of various embodiments of the disclosure should be determined with reference to the appended claims, along with the full range of equivalents to which such claims are entitled.

In the foregoing Detailed Description, various features are grouped together in example embodiments illustrated in the figures for the purpose of streamlining the disclosure. This method of disclosure is not to be interpreted as reflecting an intention that the embodiments of the disclosure require more features than are expressly recited in each claim.

Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. A device (100) for displaying an image, comprising:
a user interface (102) configured to display an image (210);
a motion sensor (104) configured to sense movement of the device (100); and
a processor (106) configured to convert the movement of the device (100) to a corresponding movement of the display of the image (210).

2. The device (100) of claim 1, wherein the corresponding movement of the display of the image (210) is a movement in an opposite direction of the movement of the device (100).

3. The device (100) of claim 1, wherein the corresponding movement of the display of the image (210) is a movement in a same direction of the movement of the device (100).

4. The device (100) of claim 1, wherein a distance of the corresponding movement of the display of the image (210) has an approximately one-to-one correspondence with a distance of the movement of the device (100).

5. The device (100) of claim 1, wherein a distance of the corresponding movement of the display of the image (210) does not have a one-to-one correspondence with a distance of the movement of the device (100).

6. The device (100) of claim 1, wherein a distance of the corresponding movement of the display of the image (210) corresponds to a speed of the movement of the device (200).

7. The device (100) of claim 1, wherein the motion sensor (104) includes:
a camera; and
an image processor.

8. The device (100) of claim 1, wherein the motion sensor (104) includes at least one of:
a gyroscope; and
an accelerometer.

9. The device (100) of claim 1, wherein:
the motion sensor (104) is configured to provide data representing the sensed movement of the device (100) to the processor (106); and
the processor (106) is configured to convert the data representing the sensed movement of the device (100) to the corresponding movement of the display of the image (210).

10. The device (100) of claim 1, wherein:
the device (100) includes a motion activation mechanism (109); and
the processor (106) is configured to:
convert the movement of the device (100) to a corresponding movement of the display of the image (210) while the motion activation mechanism (109) is engaged; and
not convert the movement of the device (100) to a corresponding movement of the display of the image (210) while the motion activation mechanism (109) is not engaged.
